# EUROPÄISCHE PATENTANMELDUNG

(11) **EP 4 802 963 A1**
(43) Veröffentlichungstag der Anmeldung: **09.09.2026**
(21) Anmeldenummer: 26160618.0
(22) Anmeldetag: 25.02.2026
(51) Int. Cl.: A47J 27/00, A47J 36/02

(54) **MEHRSCHICHTBODEN FÜR KOCHGESCHIRR**

(30) Priorität: 05.03.2025 DE 102025108315
(71) Anmelder: Fissler GmbH, 55743 Idar-Oberstein (DE)
(72) Erfinder: HEIDRICH, Benjamin, 55743 Idar-Oberstein (DE); Kubik, Ingo, 66606 St. Wendel (DE)
(74) Vertreter: Patentanwälte Bauer Vorberg Kayser

(57) **Zusammenfassung**

Die Erfindung betrifft einen Mehrschichtboden (22) für ein Kochgeschirr (20) mit einen Zubereitungsraum (24) für die Zubereitung von Speisen, aufweisend eine einem Untergrund zugewandte Außenschicht (26) aus einem ersten Material und eine an die Außenschicht (26) in Richtung des Zubereitungsraums (24) angrenzende Innenschicht (28) aus einem zweiten Material. Die Außenschicht (26) weist in ihrer der Innenschicht (28) abgewandten Außenfläche (30) zumindest eine Nut (31) auf, wobei eine Nuttiefe (T) zwischen 50 % und 95 % einer Schichtdicke (H) der Außenschicht (26) beträgt.

## Beschreibung

Die vorliegende Offenbarung betrifft einen Mehrschichtboden für ein Kochgeschirr mit einem Zubereitungsraum für die Zubereitung von Speisen, aufweisend eine einem Untergrund zugewandte Außenschicht aus einem ersten Material und eine an die Außenschicht in Richtung des Zubereitungsraums angrenzende Innenschicht aus einem zweiten Material.

Ein wesentliches, wenn nicht sogar das wesentlichste, Qualitätsmerkmal von Kochgeschirr ist die geometrische Auslegung sowie die geometrische Langzeitstabilität des Kochgeschirr-Bodens hinsichtlich eines dauerhaft möglichst guten Aufheizverhaltens sowie einer sicheren und ergonomischen Handhabung im Gebrauch.

Ein Kochgeschirr sollte auf allen Beheizungsarten bzw. Kochstellen/Heizquellen stabil, also ohne zu kippeln und wackeln aufstehen und zwischen der möglichen Aufstandsfläche und dem Geräteboden soll über den gesamten Anwendungszyklus gesehen ein möglichst geringer Abstand zu verzeichnen sein.

Das stabile Aufstehen des Gargerätes auf der Heizquelle, ohne zu kippeln und wackeln, stellt einen wesentlichen Sicherheitsaspekt dar. Jegliche vom Anwender unvorhergesehene bzw. unerwartete Bewegung des in der Anwendung stehenden heißen Gargerätes, kann in der Folge dazu führen, dass der Anwender ungewollt in Berührung mit den heißen Oberflächen kommt und Verbrennungen erleidet. Beispielsweise kann der Gargeräteboden während der Anwendung temporär oder durch mangelnde Langzeitstabilität eine dauerhafte Außenwölbung aufweisen und somit nur noch im Zentrum, am höchsten Punkt der Wölbung, auf der möglichen Aufstandsfläche der Heizquelle aufliegen. Ein solches Kochgeschirr kippelt und wackelt nicht nur, sondern kann auch sehr leicht in eine Drehbewegung versetzt oder verschoben werden, da durch die sehr geringe Aufstandsfläche auch nur eine sehr geringe Reibungskraft resultiert.

So kann z.B. bereits die resultierende Kraft des eingebrachten Drehmomentes beim Umrühren einer Suppe mittels Löffel die Reibkraft überwinden, wodurch das Kochgeschirr in eine Drehbewegung versetzt wird, welche vom Anwender gestoppt werden muss. Nicht selten hat der Anwender in diesem Moment keine freie Hand zur Verfügung, da neben dem Löffel in der einen z.B. der Deckel des Kochgeschirrs in der anderen Hand gehalten wird und es als Folge dessen dann zu unüberlegten Handlungen mit Verbrennungsfolge kommen kann.

Für ein dauerhaft gutes Aufheizverhalten ist die geometrische Auslegung sowie die geometrische Langzeitstabilität des Gargerätebodens, je nach Heizquelle, ebenso eine wesentliche Einflussgröße. Zum Beispiel kann bei Induktionsheizquellen eine ungeeignete Bodengeometrie nachteilig sein, da mit wachsendem Abstand des ferritischen Bodenmaterials des Gargerätes zu den Induktionsspulen der Heizquelle die induktive Leistungs-Einkopplung allmählich sinkt bis hin, dass die Heizquelle das Kochgeschirr per Definition nicht mehr erkennt (Schutzschaltung) und das Heizen komplett stoppt. Die größten Auswirkungen auf das Aufheizverhalten sind jedoch in der Regel bei solchen Heizquellen zu verzeichnen, welche ihre Wärmeenergie ausschließlich oder zum größten Teil nur indirekt über Wärmeleitung an das Kochgeschirr weitergeben können. Dazu gehören alle Heizquellen, welche mit eingebetteten oder abgedeckten Widerstandsheizelementen arbeiten, die klassischen, im Volksmund sogenannten, Masse- und Ceran-Kochfelder. Je geringer die Auflagefläche und je größer der Abstand des Gargerätebodens zur möglichen Auflagefläche der Heizquelle, desto größer ist das Luftpolster zwischen Gargeräteboden und Heizquelle. Da Luft vergleichsweise schlechte Wärmeleiteigenschaften hat, wird der Wärmeenergieübergang von Heizquelle zum Kochgeschirrboden signifikant verschlechtert. Neben deutlich längeren Aufheizzeiten des Gargerätes ist es sogar möglich, dass erforderliche Temperaturen z.B. für Braten & Frittieren grundsätzlich nicht mehr erreicht werden können.

Auf dem Gebiet der Kochgeschirrtechnologie ist es üblich, Mehrschichtböden zu verwenden, um eine gleichmäßige Wärmeverteilung und verbesserte Kochleistung zu erzielen. Bekannte Systeme umfassen typischerweise eine Kombination aus verschiedenen Metallen, die in Schichten angeordnet sind, um die Wärmeleitfähigkeit zu optimieren und die strukturelle Integrität des Kochgeschirrs zu gewährleisten. Eine häufig verwendete Kombination weist eine Schicht aus einem robusten Material wie Edelstahl, das für seine Korrosionsbeständigkeit und Haltbarkeit geschätzt wird, und eine Schicht aus einem Material mit hoher Wärmeleitfähigkeit, wie Aluminium oder Kupfer auf, um eine effiziente Wärmeübertragung zu gewährleisten.

Durch das einseitige Erhitzen und vor allem durch den Einsatz von verschiedenen Metallpaarungen mit verschiedenen Wärmeausdehnungskoeffizienten kommt es zu Verformungen und Spannung im Material. Weitere extreme Spannungserhöhungen werden erzeugt, wenn nach dem Erhitzen das Gargut mit kalten Lebensmitteln (z.B. Wein) oder Wasser "abgelöscht" wird, was für manche Gerichte durchaus empfohlen sein kann. Durch schnell herbeigeführte einseitige Temperaturwechsel von heiß zu kalt beginnt das Material sich binnen weniger Millisekunden von der Innenseite des Gargerätes her stark zusammenzuziehen, während die äußeren Materialschichten bzw. Querschnitte noch in heißem Zustand verweilen. Dadurch entstehen immense Zug - und Druckspannungen im Materialquerschnitt und als Folge resultierende Biegespannungen, welche bei Überschreitung einer kritischen Schwelle zu plastischen, also irreversiblen Materialverformungen führen.

Vor allem bei Mehrschichtmaterial kommt es dadurch zu sehr großen, teilweise bleibenden Verformungen, da unterschiedliche Materialen, fest miteinander verbunden sind und diese wie ein Bi-Metall wirken.

Trotz der guten Eigenschaften solcher Mehrschichtböden gibt es also Herausforderungen, die mit der thermischen Ausdehnung und den daraus resultierenden Spannungen zwischen den verschiedenen Schichten verbunden sind. Die beschriebenen Verformungen beeinträchtigen die Leistung des Kochgeschirrs und verkürzen seine Lebensdauer.

Bei bekannten Produkten wird versucht, diese Spannungen durch die Verwendung von Materialien mit ähnlichen thermischen Ausdehnungskoeffizienten oder durch das Hinzufügen zusätzlicher Schichten, die als Puffer zwischen den Schichten wirken, zu minimieren. Diese Ansätze sind jedoch mit hohen Herstellungskosten und Komplexität in der Produktion verbunden. Ein weiteres Problem besteht darin, dass die herkömmlichen Methoden zur Reduzierung von Verformungen oft nicht ausreichen, um die Anforderungen moderner Kochgeräte zu erfüllen, die häufig auf Induktionskochfeldern oder anderen Hochleistungshitzequellen verwendet werden. Diese Bedingungen erfordern eine noch präzisere Kontrolle der thermischen Ausdehnung, um eine optimale Leistung zu gewährleisten.

Die Aufgabe der Erfindung besteht darin, ein Mehrschichtbodensystem bereitzustellen, das die Nachteile bekannter Systeme zumindest teilweise überwindet, kostengünstig herstellbar ist und trotzdem eine hohe Nutzungsdauer der Produkte gewährleistet.

Die Aufgabe wird erfindungsgemäß durch einen Mehrschichtboden mit den Merkmalen des Anspruchs 1 gelöst.

Die Erfindung ermöglicht es, die resultierenden Biegespannungen, welche während der Benutzung, aber auch bei Prüfverfahren im Herstellungsprozess erzeugt werden, signifikant zu senken. In der Folge werden über die geplante Produktlebensdauer irreversible plastische Verformungen deutlich reduziert. Dadurch wiederum kann die werksseitig eingebrachte Bodendurchbiegung (konkave Aufstandsfläche) deutlich reduziert werden, sodass ein möglichst geringer Abstand des Gargerätebodens zur möglichen Auflagefläche der Heizquelle vorherrscht bzw. bestmögliches Aufheizverhalten dauerhaft erzielt wird.

Als weiterer positiver Nebeneffekt kann die Erfindung gezielt auch als Designelement genutzt bzw. ausgestaltet werden, um damit eine gewisse Abgrenzung zu den Mitbewerbern zu erzielen.

Der Begriff "Mehrschichtboden" bezieht sich auf einen Boden, der aus mehreren Schichten unterschiedlicher Materialien besteht, um spezifische Eigenschaften zu erzielen.

Der Aufbau eines Mehrschichtbodens erfolgt in der Regel "monolithisch". Eine Außenschicht besteht aufgrund der Notwendigkeit der Eignung auf Induktionskochstellen vorzugsweise aus einem ferritischen Edelstahl. Die Außenschicht liegt mit ihrer Außenfläche direkt auf einem Untergrund bzw. einer Wärmequelle auf und ist deswegen robust und widerstandsfähig gegenüber mechanischen und thermischen Belastungen. Eine Bodenschicht im Zubereitungsraum bildet den Boden des Kochgeschirrs aus und ist vorzugsweise aus einem für den Kontakt mit Lebensmittel geeigneten und zugelassenen Material, beispielsweise austenitischem Edelstahl gefertigt. Zwischen diesen beiden Schichten ist die Innenschicht vorgesehen, die aus einem Material besteht, welches dazu geeignet ist, unter hohem Druck und hoher Temperatur (Walzschweißplattieren) stoffschlüssig eine thermomechanisch ausreichend stabile Verbindung mit Edelstählen einzugehen. Darüber hinaus ist diese Innenschicht auch zwingend notwendig, um eine für den Anwendungsfall ausreichende Bodenstabilität zu erzielen. Als Material für diese Innenschicht hat sich Aluminium als besonders vorteilhaft erweisen, aber auch Kupfer kann dafür verwendet werden.

Ein Mehrschichtboden kann auch mehrere als drei Schichten aufweisen, es können zwischen der Außenschicht und der Bodenschicht weitere Schichten aus geeigneten Materialien vorgesehen sein.

Ausgehend vom Zubereitungsraum in Richtung Außenfläche können beispielsweise Lagen aus nachfolgenden Materialien vorgesehen sein:
- Stahl
- Aluminium
- Induktionskompatibler Stahl
   oder
- Stahl
- Aluminium
- Stahl
- Aluminium
- Induktionskompatibler Stahl
   oder
- Stahl
- Dreifachlage Aluminium
- Stahl (induktionskompatibel)

Erfindungsgemäß weist die Außenschicht in ihrer Außenfläche zumindest eine Nut auf, deren Nuttiefe zwischen 50 % und 95 % einer Schichtdicke der Außenschicht beträgt.

Die Erfindung sieht vor, die Außenschicht des Mehrschichtbodens zumindest im Übergangsbereich von Boden zu einer Wand des Kochgeschirrs durch einen gezielten geometrischen Eingriff derart zu schwächen, dass ihre Wirkung als Zug- und Druckstrebe bei am Kochgeschirr schnell herbeigeführten einseitigen Temperaturwechseln signifikant reduziert wird. Die Nut bewirkt eine Reduzierung des thermischen Einflusses der Außenschicht auf die Innenschicht und verringert die damit zusammenhängenden Biegespannungen, welche bei Überschreitung einer kritischen Schwelle zu plastischen, also irreversiblen Materialverformungen im Bodenbereich führen. Versuche haben gezeigt, dass im Prüfverfahren auftretende plastische Verformungen im deutlich zweistelligen Prozentbereich gegenüber Mehrschichtböden ohne erfindungsgemäße Nut reduziert werden konnten.

Die Nut ermöglicht es, dass sich die Außenschicht aufgrund von thermischen Einflüssen längen und zusammenziehen kann. Durch die Reduktion der Spannungen und Verformungen kann eine ansonsten notwendige entgegenwirkende werkseitige Bodenwölbung um 10-15 % reduziert werden.

In der Praxis ergeben sich in diesem Zusammenhang die drei nachfolgend erläuterten wesentliche Wirkmechanismen:
Fall 1:
   1.1 Das Kochgeschirr ist komplett kalt, also homogen auf Raumtemperatur.
   1.2 Die Außenschicht (der Boden) wird durch die Kochplatte erhitzt und dehnt sich als erstes aus. Die weiteren Schichten im Boden sind noch kalt und es entsteht der Bimetalleffekt (Effekt 1), welcher Spannungen verursacht, die den Boden zu einer Außenwölbung (dem sogenannten Tänzer) bewegen. Es gibt jedoch noch einen weiteren Effekt (Effekt 2), der den Boden zu einer Außenwölbung bewegt: Die Ausdehnung der Außenschicht wird durch den Gefäßkörper (also die umlaufende Wand) verhindert, da diese zunächst auch noch kalt ist (Raumtemperatur) und sich nicht im Durchmesser ausgedehnt hat. Eine geometrische Schwächung direkt im Übergangsbereich von Außenschicht zur Wand mildert diesen Effekt 2 entsprechend ab. Je stärker die Schwächung, desto stärker die Milderung.
      Der beschriebene Effekt 1 kann erfindungsgemäß jedoch ebenfalls durch geometrische Schwächungen der Außenschicht abgemildert werden. Diese geometrischen Schwächungen müssen jedoch in der Fläche der Außenschicht vorgesehen werden (zumindest eine oder mehrere vorzugsweise umlaufende Nuten auf verschiedenen Radien oder radiale Nuten, welche die äußere Schicht optisch in "Kuchenstücke" unterteilt, oder beides usw.). Zusammengefasst müssen also möglichst viele "Dünnstellen" in der äußeren Schicht erzeugt werden, sodass die durch die Ausdehnung entstehenden Kräfte (Druckkräfte) in den "Dünnstellen" "verpuffen" bzw. nicht mehr vollständig übertragen werden können.
Fall 2:
   2.1 Das Kochgeschirr ist bereits komplett heiß, also homogen auf Anwendungstemperatur.
   2.2 Die Innenschicht (innerer Gefäßboden) wird nun schlagartig abgeschreckt (im Test kaltes Wasser, in der Praxis z.B. Sahne, Wein usw.). Die Innenschicht zieht sich schlagartig zusammen, die weiteren äußeren Schichten im Boden sind noch kalt und es entsteht in der Wirkung der gleiche Bimetalleffekt (Effekt 1) wie zuvor unter 1.2 geschildert, der den Boden zu einer Außenwölbung (Tänzer) bewegt. Auch hier gibt es noch einen weiteren Effekt (Effekt 3), der den Boden zu einer Außenwölbung bewegt:
      Die entstehenden Zugspannungen der Innenschicht sind stark genug, um den Gefäßköper in seinem Durchmesser kleiner zu ziehen. Das wiederum führt zu Druckspannungen, welche im Übergangsbereich der Wand zum Boden auf die Außenschicht wirken, welche dadurch gestaucht wird. Auch für diesen Fall 2 sind zur Milderung der Effekte 1 und 3 die gleichen erfindungsgemäßen geometrischen Schwächungen wie zuvor in Fall 1 aufgeführt hilfreich. Auch hier wirken in den "Dünnstellen" nur Druckkräfte.
Fall 3
   3.1 Das Kochgeschirr ist komplett kalt, also homogen auf Raumtemperatur.
   3.2 Es wird heiße Flüssigkeit in das Gefäß eingefüllt, die Innenschicht (innerer Gefäßboden) wird nun erhitzt und dehnt sich als erstes aus. Die weiteren Schichten im Boden sind noch kalt und es entsteht der Bimetalleffekt (Effekt 1), welcher Spannungen verursacht, die den Boden zu einer Innenwölbung bewegen. Ein weiterer Effekt (Effekt 4), welcher in diesem Fall wirkt, ist folgender:
      Die entstehenden Druckspannungen der Innenschicht sind stark genug, um den Gefäßköper in seinem Durchmesser größer zu drücken. Das wiederum führt zu Zugspannungen, welche im Übergangsbereich der Wand zum Boden auf die Außenschicht wirken, welche dadurch gezogen wird. Die Ausdehnung des Gefäßkörpers durch die aufgrund der Innenschicht erzeugten Druckspannungen wird also in gewisser Weise durch die Außenschicht verhindert. Eine geometrische Schwächung direkt im Übergangsbereich von Außenschicht zur Gefäßwandung mildert diesen Effekt 4 entsprechend ab. Je stärker die Schwächung, desto stärker die Milderung. Also auch für diesen Fall 3 sind zur Milderung der Effekte 1 u. 4 die gleichen erfindungsgemäßen geometrischen Schwächungen wie zuvor in Fall 1 aufgeführt hilfreich. Jedoch wirken in den "Dünnstellen" nur Zugkräfte.

Die Nuttiefe ist ein Maß für die Tiefe der Nut von der Außenfläche bis zum Nutgrund und beträgt erfindungsgemäß zwischen 50 % und 95 %, vorzugsweise 55 % bis 80 % der Dicke der Außenschicht. Als besonderes geeignet hat sich eine Tiefe von etwa 60 % erwiesen. Dies bedeutet, dass die Nut einerseits tief genug ist, um ihre Trennfunktion zu erfüllen, sie andererseits aber die Außenschicht nicht vollständig durchstößt. Dies ist wichtig, da ansonsten die Innenschicht, die in der Regel empfindlicher gegenüber äußeren Einwirkungen ist, freigelegt wäre und beispielsweise bei häufiger Reinigung in der Geschirrspülmaschine zerstört werden könnte. Eine zu tiefe Nut könnte die Stabilität der Außenschicht beeinträchtigen, während eine zu flache Nut möglicherweise nicht die gewünschten thermischen Vorteile bietet. Die Interaktion zwischen der Außenschicht und der Innenschicht wird durch die erfindungsgemäße Tiefe der Nut nicht negativ beeinflusst, da aufgrund der erfindungsgemäßen Nuttiefe die mechanische Verbindung zwischen den Schichten vollflächig erhalten bleibt.

Der oben beschriebene Effekt 1, der Bimetalleffekt, kann nur durch geometrische Schwächungen der Außenschicht abgemildert werden. Die geometrischen Schwächungen sind deshalb erfindungsgemäß nur in der Fläche der Außenschicht vorgesehen (z.B. mehrere umlaufende Nuten auf verschiedenen Radien oder radiale Nuten, welche die äußere Schicht optisch in "Kuchenstücke" unterteilt, oder eine Kombination von beiden).

Nach einer vorteilhaften Ausführungsform der Erfindung ist die Nut scharfkantig ausgeführt. Die Nut kann durch verschiedene geeignete Verfahren erzeugt werden, eine spanende Materialwegnahme hat sich als besonders einfach und wirkungsvoll erwiesen.

Die Außenfläche der Außenschicht und die Nutwände der Nut können in einer ersten Ausführungsvariante gerundet ausgeführt sein, also einen Radius aufweisen. Derartig abgerundete Kanten sind grundsätzlich stabiler und widerstandsfähiger.

In einer weiteren bevorzugten Ausführungsvariante können die Außenschicht und die Nutwände aber trotzdem scharfkanig ausgeführt sein und bevorzugt einen Winkel von 90° bis 95°, vorzugsweise 90°, einschließen. Erfindungsgemäß ist auch ein Hinterschnitt der Nutwände möglich, diese können also auch im Bereich 80° bis 89° liegen. Diese spezifische Gestaltung der Nutwände in Bezug auf die Außenfläche der Außenschicht bietet mehrere Vorteile. Im Gegensatz zu abgerundeten Kanten sind dann bei gleicher "optischer" Nutbreite an der Oberfläche der Außenschicht die Breite am Nutboden und damit auch die "Dünnstelle" entsprechend in ihrer Wirkung nicht reduziert. Eine Nut mit einem Winkel von etwa 90° ist hinsichtlich Haltbarkeit bedenkenlos umsetzbar, die Außenschicht wird an dieser Stelle eher nicht reißen, da diese flächig mit der Innenschicht verbunden ist, insbesondere bei einer Herstellung des Kochgeschirrs im Pressschweißprozess. Darüber hinaus erleichtert ein solcher Winkel auch die Herstellung der Nut, da er eine präzise und konsistente Fertigung ermöglicht. Dies führt zu einer verbesserten Qualität und Gleichmäßigkeit des Endprodukts. Die präzise Gestaltung der Nut kann durch moderne Fertigungstechniken wie CNC-Fräsen und Drehen, bzw. spanende Materialabhebung oder Lasergravieren erreicht werden, was eine hohe Wiederholgenauigkeit und Konsistenz in der Produktion ermöglicht. Dies senkt die Produktionskosten und erhöht Qualität des Endprodukts.

Erfindungsgemäß ist es auch möglich die Nut durch Prägen zu erzeugen. Im Ergebnis ist die Materialdicke des Nutbodens zwar gleich der Ausgangsdicke der Außenschicht, jedoch wirkt die Nut trotzdem wie eine Art Ziehharmonika-Gelenk, was sich ebenfalls positiv auf die beschriebenen Effekte auswirkt. Zudem kann die scharfkantige Ausführung der Nut ästhetische Vorteile bieten, indem sie dem Kochgeschirr ein modernes und funktionales Design verleiht, das sich von herkömmlichen Produkten abhebt. Die Kombination dieser funktionalen und ästhetischen Vorteile kann die Attraktivität des Kochgeschirrs für Verbraucher erhöhen, die Wert auf Leistung und Design legen.

Insgesamt bietet die spezifische Winkelgestaltung der Nutwände in Bezug auf die Außenfläche der Außenschicht also eine Reihe von Vorteilen, die die mechanische Stabilität, die Herstellungspräzision, die Schichtbindung und die thermische Effizienz des Mehrschichtbodens für Kochgeschirr verbessern.

Grundsätzlich ist es erfindungsgemäß erstrebenswert die Nut so tief wie möglich auszugestalten, um eine maximale Schwächung zu bewirken. Ein Mindestmaß an Restschichtstärke der Außenschicht von 0,2 mm hat sich dabei als sinnvoll und ausreichend stabil erwiesen. Darüber hinaus hat sich eine Mindestbreite der Nut von etwa 0,5 mm an der engsten Stelle als notwendig für eine ausreichende Schwächung gezeigt.

Vorteilhafterweise beträgt die Nuttiefe zwischen 20 % und 50 %, vorzugsweise zwischen 30 % und 40 % der Nutbreite. Durch die spezifische Tiefe und Breite der Nut wird die strukturelle Integrität der Außenschicht erhalten, die thermodynamischen Nachteile des Mehrschichtbodens aber verringert.

Nach einer Ausführungsform der Erfindung weist die Außenschicht bzw. die Außenfläche eine runde Form auf, wobei die Breite der Nut 0,2 % bis 0,7 % Prozent des Durchmessers der Außenfläche entspricht. Diese spezifische Gestaltung der Nutbreite in Relation zum Durchmesser und der Form der Außenfläche bringt mehrere Vorteile mit sich. Erstens ermöglicht die runde Ausführung der Außenschicht eine gleichmäßige Verteilung der Wärme, was zu einer effizienten und gleichmäßigen Erhitzung der Speisen im Zubereitungsraum führt. Die runde Form trägt auch zur strukturellen Integrität des Bodens bei, da sie Spannungen gleichmäßig verteilt und potenzielle Schwachstellen minimiert. Die Festlegung der Nutbreite auf einen bestimmten Prozentsatz des Durchmessers der Außenfläche sorgt dafür, dass die Nut eine optimale Größe hat, um die gewünschten mechanischen und thermischen Eigenschaften zu erzielen, ohne die strukturelle Integrität der Außenschicht zu beeinträchtigen. Eine Nutbreite zwischen 0,2 und 0,7 Prozent des Durchmessers der Außenfläche stellt sicher, dass die Nut breit genug ist, um die gewünschte thermische Funktion der Trennung zu erfüllen, während gleichzeitig die Stabilität der Außenschicht erhalten bleibt. Diese spezifische Dimensionierung der Nutbreite trägt auch dazu bei, die Herstellungskosten zu optimieren, da sie die Materialnutzung effizient gestaltet. Die spezifische Kombination aus runder Form der Außenschicht und optimaler Nutbreite trägt somit zu einer verbesserten Leistung, Haltbarkeit und Attraktivität des Kochgeschirrs bei.

Grundsätzlich kann der erfindungsgemäße Mehrschichtboden jede für das jeweilige Kochgeschirr geeignete Form aufweisen, zum Beispiel rund, oval oder eckig. Im Folgenden wird rein beispielhaft von einer runden Grundform ausgegangen.

Vorzugsweise ist die Nut im äußeren Randbereich des Mehrschichtbodens als umlaufende Nut ausgeführt ist. Diese umlaufende Nut stellt eine kontinuierliche Vertiefung über den gesamten Umfang des äußeren Randbereichs der Außenschicht dar. Eine Positionierung im Randbereich ist aus thermischen Gründen sehr vorteilhaft, insbesondere weil dort der Einfluss auf eine Wärmeübertragung an das Kochgut kaum gestört oder verändert wird.

Die Nut kann als ringförmige durchgängige Nut mit gleichbleibenden geometrischen Abmessungen ausgeführt sein. Dies ist fertigungstechnisch und auch optisch vorteilhaft. Die Nut kann in ihrem Verlauf aber auch geometrische Änderungen oder vollständige Unterbrechungen aufweisen. Diese Unterbrechungen können verschiedene Formen und Anordnungen haben, wie beispielsweise periodische oder unregelmäßige Abstände, die entlang der Nut angeordnet sind. Die spezifische Gestaltung der geometrischen Anpassungen oder Unterbrechungen kann auch die Reinigung des Kochgeschirrs erleichtern.

Die Außenschicht kann alternativ aber auch mehrere Nuten in ihrer Außenfläche aufweisen. Nach einer Ausführungsform der Erfindung weist der Mehrschichtboden für ein Kochgeschirr mehrere Nuten in Form von umlaufenden konzentrischen Kreisen in der Außenfläche auf. Diese spezifische Anordnung der Nuten verbessert die thermischen Eigenschaften des Mehrschichtbodens zusätzlich, indem sie Spannungen und Verformungen aufgrund der thermischen Ausdehnung und Kontraktion über die Fläche besser verteilen. Von den mehreren Nuten können erfindungsgemäß eine oder mehrere Nuten in ihrem Verlauf geometrische Änderungen oder vollständige Unterbrechungen aufweisen, während zumindest eine Nut als ringförmige durchgängige Nut mit gleichbleibenden geometrischen Abmessungen ausgeführt ist. Die Kombination von zumindest einer durchgängigen mit zumindest einer unterbrochenen Nut ist günstig in Bezug auf Spannungen und Verformungen.

Die Innenfläche der Bodenschicht ist mit den Speisen in Kontakt und bewirkt eine Übertragung der Wärme auf die Speisen. Die Bodenschicht bzw. deren Innenfläche weist gegenüber der Innenschicht andere Eigenschaften auf, insbesondere ist sie widerstandsfähig gegenüber Kratzern und Abrieb. Die Innenfläche kann zusätzlich eine Antihaftbeschichtung aufweisen.

Die Innenschicht wirkt als Mittelschicht wie ein Puffer und sorgt dafür, dass die Wärme effizient und gleichmäßig von der Außenschicht an die Bodenschicht übertragen wird. Die Kombination dieser drei Schichten führt zu einer verbesserten Gesamtleistung des Kochgeschirrs, da sie eine optimale Wärmeverteilung und -speicherung gewährleistet, was zu einer effizienteren Zubereitung von Speisen führt. Darüber hinaus trägt die dreischichtige Struktur zur Langlebigkeit des Kochgeschirrs bei, da jede Schicht spezifische Eigenschaften bietet, die den unterschiedlichen Anforderungen beim Kochen gerecht werden. Die Außenschicht schützt vor äußeren Beschädigungen, die Mittelschicht sorgt für eine effiziente Wärmeverteilung, und die Bodenschicht bietet eine benutzerfreundliche Oberfläche für die Zubereitung von Speisen. Diese Konstruktion ermöglicht es, die Vorteile der einzelnen Materialien optimal zu nutzen und gleichzeitig die Nachteile zu minimieren, was in Kombination mit der erfindungsgemäßen Nut zu einem hochwertigen und langlebigen Kochgeschirr führt.

Die Herstellung des Mehrschichtbodens kann durch verschiedene Verfahren zur Verbindung der Schichten, wie z.B. Verkleben oder Schweißen erfolgen. Diese Methoden gewährleisten eine robuste und dauerhafte Verbindung der Metallschichten. Nach der Verbindung wird der Mehrschichtboden in die gewünschte Form gebracht, um eine gleichmäßige und stabile Oberfläche zu gewährleisten. Eine Wärmebehandlung kann durchgeführt werden, um Spannungen im Material abzubauen und die Wärmeverteilung zu verbessern.

Die erfindungsgemäße Nut kann abschließend, aber auch vor dem Zusammenfügen der einzelnen Schichten oder auch vor der Wärmebehandlung eingebracht werden.

Erfindungsgemäß können unterschiedliche Querschnitte für die Nut vorgesehen sein. Beispielsweise kann diese scharfkantig -rechtwinklig ausgeführt sein, sie kann am Nutgrund abgerundete Ecken zu Nutwänden der Nut aufweisen, die der Außenseite zugewandten Übergänge zur Außenfläche können auch abgerundet sein oder es können Kombinationen der genannten Ausführungsmöglichkeiten vorgesehen sein. Grundsätzlich können die Nuten im Querschnitt symmetrisch oder unsymmetrisch ausgeführt sein, beispielsweise können sie auch als Einkerbungen mit dreieckiger oder ähnlicher Grundform ausgeführt sein.

Der erfindungsgemäße Mehrschichtboden ermöglicht durch die verbesserte Bodenstabilität vorteilhafterweise eine Reduzierung der Gesamtmaterialstärken im Bodenbereich.

Die Erfindung wird anhand der nachfolgenden Figuren näher erläutert. Die Figuren zeigen nur beispielhaft ein bevorzugtes Ausführungsbeispiel als Prinzipdarstellung, die Erfindung soll nicht auf die gezeigten Abmessungen und Formen beschränkt sein. Es zeigen:
- Figur 1:: ein Kochgeschirr von unten mit einer umlaufenden Nut im Randbereich einer Außenfläche,
- Figur 2:: eine schematische Darstellung eines Querschnitts des Randbereichs eines Mehrschichtbodens mit der Nut,
- Figur 3:: ein Kochgeschirr von unten mit mehreren Nuten in Form von umlaufenden konzentrischen Kreisen in der Außenfläche des Mehrschichtbodens,
- Figur 4:: einen Querschnitt einer ersten Ausführungsvariante eines geeigneten Mehrschichtbodens,
- Figur 5:: einen Querschnitt einer zweiten Ausführungsvariante eines geeigneten Mehrschichtbodens,
- Figur 6:: verschiedene Nutenformen im Querschnitt.

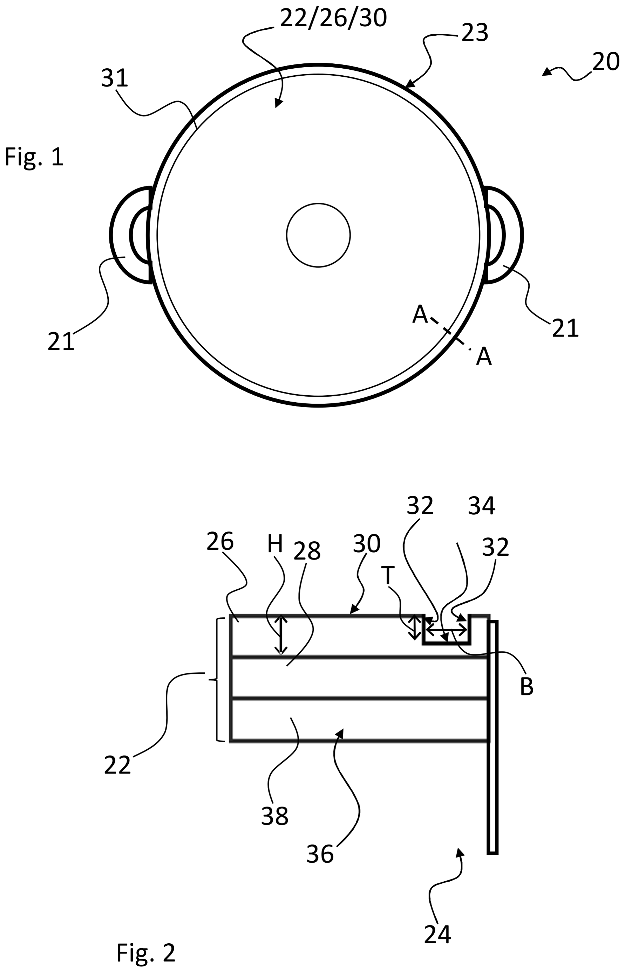

Figur 1 zeigt ein Kochgeschirr 20, im gezeigten Ausführungsbeispiel einen üblichen Topf mit einem Mehrschichtboden 22 von unten. Das Kochgeschirr 20 weist eine sich an einen Randbereich des Mehrschichtbodens 22 anschließende Wand 23 auf, wodurch ein Zubereitungsraum 24 innerhalb des Kochgeschirrs 20 gebildet ist. An einer Wandaußenseite sind Griffe 21 angeordnet. Das Kochgeschirr 20 kann auch sozusagen einstückig aufgebaut sein, die Wand 23 und der Mehrschichtboden 22 weisen den gleichen Aufbau auf und gehen ineinander über.

Die Figuren zeigen weiterhin, dass der Mehrschichtboden 22 im gezeigten Ausführungsbeispiel aus einer Außenschicht 26, einer angrenzenden Innenschicht 28 und einer an die Innenschicht angrenzenden Bodenschicht 38 gebildet ist. Die Außenschicht 26 und die Bodenschicht 38 können aus dem gleichen Material, beispielsweise Edelstahl gefertigt sein, die verschiedenen Schichten 26, 28, 38 können aber auch aus unterschiedlichen Materialien bestehen.

Die Außenschicht 26 ist auf einer Außenseite des Kochgeschirrs 20 angeordnet und kommt mit einer Wärmequelle, beispielsweise einem Induktionskochfeld in Kontakt. Die Innenschicht 28 ist jeweils vollflächig mit der Außenschicht 26 und der Bodenschicht 38 verbunden, sie bildet eine Mittelschicht zwischen der Außenschicht 26 und der Bodenschicht 38.

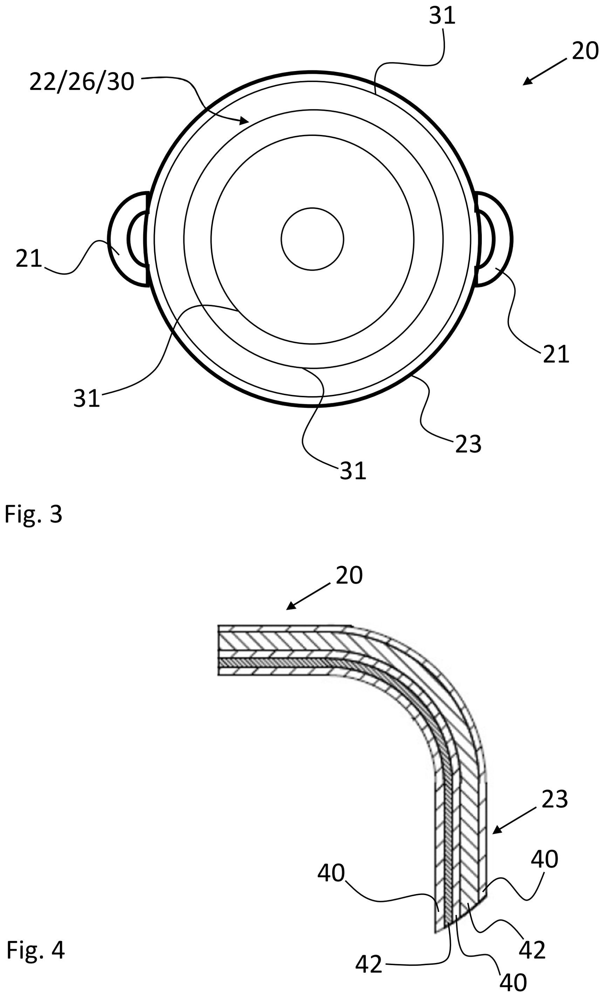

Die Außenschicht 26 weist in ihrer Außenfläche 30 eine oder mehrere Nuten 31 auf. Wie in Figur 1 gezeigt, kann die Nut 31 als umlaufende kreisförmige Nut 31 im Randbereich der Außenfläche 30 der Außenschicht 26 angeordnet sein. Gemäß der Ausführungsform nach Figur 3 können aber auch mehrere Nuten 31 als kreisförmige Nuten 31 vorgesehen sein. Unabhängig davon sind auch weitere Ausrichtungen und Anordnungen von Nuten 31 denkbar.

Die Nuten 31 sind derart gestaltet, dass sie auftretende nachteilige Effekte reduzieren, die insbesondere durch schnelle Abkühlung oder Erwärmung entstehen, beispielsweise Bimetalleffekte und/oder Auswirkungen von Druck- und Zugkräften.

Figur 2 stellt eine stark vereinfachte Querschnittsansicht des Mehrschichtbodens 22 im Bereich einer Nut 31 dar (etwa bei Position A-A in Fig. 1). Hier wird die Struktur der Nuten 30 deutlicher. Die Nut weist Nutwände 32 und einen Nutgrund 34 auf, eine Nuttiefe T beträgt im gezeigten Ausführungsbeispiel 0,3 mm bei einer Schichtdicke H der Außenschicht 26 von etwa 0,5 mm. Die Nutbreite B beträgt im gezeigten Ausführungsbeispiel 1 mm, was etwa 0,5 % des Durchmessers einer üblichen runden Außenfläche 30 von 210 mm entspricht. Die Nutwände 32 und der Nutgrund 34 schließen gemäß dem Beispiel in Figur 2 ebenfalls einen Winkel von 90° ein. Die Nuttiefe T beträgt 20 % bis 50 %, vorzugsweise 30 % bis 40 % der Nutbreite B.

Wesentlich ist, dass die Nut 31 die Außenschicht 26 nicht durchbricht und die Innenschicht 28 freilegt, sondern dass sich die Nut 31 ausschließlich in die Außenschicht 26 hineinerstreckt und die Innenschicht 28 durch die Außenschicht 26 abgedeckt bleibt. Die Bodenschicht 38 bildet eine dem Zubereitungsraum 24 zugewandte Innenfläche 36 zur Erwärmung von Kochgut aus.

In dem in Fig. 2 gezeigten Ausführungsbeispiel ist die Nut 31 scharfkantig ausgeführt, die Außenfläche 30 der Außenschicht 26 und die Nutwände 32 der Nut 31 schließen jeweils einen Winkel von etwa 90° ein.

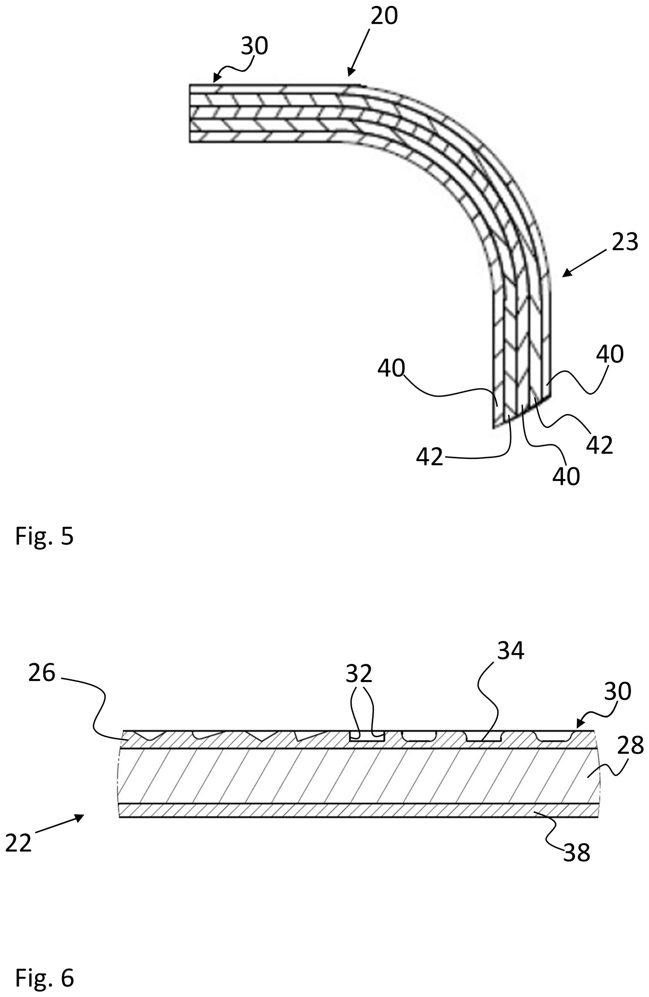

Die Figuren 4 und 5 zeigen beispielhaft unterschiedliche Aufbauvarianten des Mehrschichtbodens 22. In der Ausführungsvariante gemäß Figur 4 ist der Mehrschichtboden 22 ausgehend vom Zubereitungsraum 24 in Richtung Außenfläche aus den nachfolgenden Lagen gebildet:
- Stahlschicht 40
- Aluminiumschicht 42
- Stahlschicht 40
- Aluminiumschicht 42
- Stahlschicht 40

Die die Außenfläche 30 ausbildende Stahlschicht 40 ist vorzugsweise für eine induktive Erwärmung geeignet.

In der Ausführungsvariante gemäß Figur 5 weist der Mehrschichtboden 22 einen dreilagigen Aluminiumkern auf. Ausgehend vom Zubereitungsraum 24 in Richtung Außenfläche ergeben sich die nachfolgenden Lagen:
- Stahlschicht 40
- Aluminiumschicht 42 (Legierung)
- Aluminium 42
- Aluminiumschicht 42 (Legierung)
- Stahlschicht 40

Die die Außenfläche 30 ausbildende Stahlschicht 40 ist vorzugsweise für eine induktive Erwärmung geeignet.

Figur 6 zeigt einen Ausschnitt eines mehr Schichtbodens 22. Beispielhaft sind nebeneinander verschiedene Ausführungsformen der erfindungsgemäßen Nut 31 im Querschnitt dargestellt. Erkennbar ist, dass diese beispielsweise symmetrisch oder unsere unsymmetrisch und/oder dass der Übergang vom Nutgrund 34 in die Nutwände 32 rechtwinklig oder abgerundet ausgeführt sein kann. Die Nut 31 kann auch eine Art Dreiecksform oder einen geschwungenen Nutgrund 34 aufweisen. Insbesondere bei den letztgenannten Querschnittsformen ist der Übergang vom Nutgrund 34 in die Nutwände 32 fließend.

In den gezeigten Ausführungsbeispielen weisen die Nuten 31 über ihren Verlauf eine durchgängig gleiche Nuttiefe T und Nutbreite B auf, in alternativen Varianten können aufgrund besonderer Anforderungen aber auch Unterbrechungen und geometrische Änderungen über ihren Verlauf vorgesehen sein.

### Bezugsziffern

**20:** Kochgeschirr
**21:** Griff
**23:** Wand
**22:** Mehrschichtboden
**24:** Zubereitungsraum
**26:** Außenschicht
**28:** Innenschicht
**30:** Außenfläche
**31:** Nut
**32:** Nutwände
**34:** Nutgrund
**36:** Innenfläche
**38:** Bodenschicht
**40:** Stahlschicht
**42:** Aluminiumschicht

## Patentansprüche

1. Mehrschichtboden (22) für ein Kochgeschirr (20) mit einem Zubereitungsraum (24) für die Zubereitung von Speisen, aufweisend eine einem Untergrund zugewandte Außenschicht (26) aus einem ersten Material und eine an die Außenschicht (26) in Richtung des Zubereitungsraums (24) angrenzende Innenschicht (28) aus einem zweiten Material, **dadurch gekennzeichnet, dass** die Außenschicht (26) in ihrer der Innenschicht (28) abgewandten Außenfläche (30) zumindest eine Nut (31) aufweist, wobei eine Nuttiefe (T) zwischen 50 % und 95 % einer Schichtdicke (H) der Außenschicht (26) beträgt.

2. Mehrschichtboden (22) nach Anspruch 1, **dadurch gekennzeichnet, dass** die Nuttiefe (T) derart tief ist, dass eine Restschichtdicke der Außenschicht (26) mindestens 0,2 mm beträgt.

3. Mehrschichtboden (22) nach Anspruch 1 oder 2, **dadurch gekennzeichnet, dass** die Nut (31) scharfkantig, insbesondere mit rechtwinkligen Übergängen von Nutwänden (32) zu einem Nutgrund (34) und/oder zur Außenfläche (30) der Außenschicht (26) ausgeführt ist.

4. Mehrschichtboden (22) nach Anspruch 1 oder 2, **dadurch gekennzeichnet, dass** die Nut (31) im Bereich der Übergänge der Nutwände (32) zum Nutgrund (34) und/oder zur Außenfläche (30) der Außenschicht (26) abgerundet ausgeführt ist.

5. Mehrschichtboden (22) nach einem der Ansprüche 1 bis 4, **dadurch gekennzeichnet, dass** die Außenfläche (30) der Außenschicht (26) und Nutwände (32) der Nut (31) einen Winkel von 85° bis 95°, vorzugsweise 90° einschließen.

6. Mehrschichtboden (22) nach einem der Ansprüche 1 bis 5, **dadurch gekennzeichnet, dass** die Nutwände (32) der Nut (31) und ein Nutgrund (34) einen Winkel von 85° bis 95°, vorzugsweise 90° einschließen.

7. Mehrschichtboden (22) nach einem der Ansprüche 1 bis 6, **dadurch gekennzeichnet, dass** die Nut (31) eine Nutbreite (B) von mindestens 0,5 mm an ihrer engsten Stelle aufweist.

8. Mehrschichtboden (22) nach einem der Ansprüche 1 bis 7, **dadurch gekennzeichnet, dass** die Außenfläche (30) der Außenschicht (26) rund ausgeführt ist und die Nutbreite (B) 0,2 bis 0,7 %, vorzugsweise 0,5 % des Durchmessers der Außenfläche (30) beträgt.

9. Mehrschichtboden (22) nach einem der Ansprüche 1 bis 8, **dadurch gekennzeichnet, dass** die Nut (31) im äußeren Randbereich des Mehrschichtbodens (22) als umlaufende Nut (31) ausgeführt ist.

10. Mehrschichtboden (22) nach einem der Ansprüche 1 bis 9, **dadurch gekennzeichnet, dass** die Nut (31) in ihrem Verlauf Unterbrechungen aufweist.

11. Mehrschichtboden (22) nach einem der Ansprüche 1 bis 10, **dadurch gekennzeichnet, dass** mehrere Nuten (31) in die Außenfläche (30) eingebracht sind.

12. Mehrschichtboden (22) nach einem der Ansprüche 1 bis 11, **gekennzeichnet durch** eine Ausbildung als zumindest dreischichtiger Mehrschichtboden (22), wobei zumindest eine Innenschicht (28) als Mittelschicht zwischen der Außenschicht (26) und einer Bodenschicht (38) angeordnet ist und die Bodenschicht (38) die Innenfläche (36) ausbildet.
